# EUROPÄISCHE PATENTANMELDUNG

(11) **EP 2 505 349 A1**
(43) Veröffentlichungstag der Anmeldung: **03.10.2012**
(21) Anmeldenummer: 11008748.3
(22) Anmeldetag: 03.11.2011
(51) Int. Cl.: B32B 5/02, B32B 7/00, B32B 9/02, B60R 13/02

(54) **Flächiges Material zum Beziehen von Formteilen**

(30) Priorität: 16.03.2011 DE 102011014089
(71) Anmelder: K.L. Kaschier- und Laminier GmbH, 48455 Bad Bentheim-Gildehaus (DE)
(72) Erfinder: Arnold, Elke, 48599 Gronau-Epe (DE); Voogsgeerd, Frank, 7535 BL Enschede (NL)
(74) Vertreter: Cohausz Hannig Borkowski Wißgott

(57) **Zusammenfassung**

Die Erfindung betrifft ein Flächiges Material aus einem Leder oder Lederimitat zum Beziehen von Formbauteilen insbesondere für einen KFZ-Himmel oder von KFZ-Lenkrädern, wobei das Material beim Beziehen in einer Richtung (Zugrichtung) stärker gezogen wird als in der Querrichtung hierzu, wobei auf die Materialrückseite eine Textilie aufgeklebt oder aufgeschweißt ist, die in einer Richtung eine höhere Dehnbarkeit aufweist als quer dazu, und dass die Textilie derart auf der Materialrückseite aufliegt, dass die Textilie in Zugrichtung des flächigen Materials dehnbarer und nachgiebiger ist als quer dazu.

## Beschreibung

Die Erfindung betrifft ein flächiges Material aus Leder oder einem Lederimitat zum Beziehen von Formbauteilen insbesondere für einen KFZ-Himmel oder von KFZ-Lenkrädern, wobei das Material beim Beziehen in einer Richtung (Zugrichtung) stärker gezogen wird als in der Querrichtung hierzu.

Es ist bekannt, exklusive Dekomaterialien durch diverse händische und automatisierte Verfahren auf verschiedene Formbauteile aufzubringen. Insbesondere bei "schwierigen" Formen wie tiefen Dachhimmeln oder Lenkrädern müssen hohe Kräfte aufgebracht werden. Das Material muss insofern zum einen sehr "strapazierfähig" insbesondere reißfest sein, zum anderen aber extrem flexibel vor allem dehnbar sein, um sich glatt um alle Ausformungen formen zu lassen. Die bekannten Materialien sind begrenzt bezüglich ihrer Strapazierfähigkeit und Dehnbarkeit und reißen leicht ein.

Aufgabe der Erfindung ist es, ein flächiges Material der eingangs genannten Art so zu verbessern, dass es bei hoher Reißfestigkeit leicht zu verarbeiten ist, so dass Formbauteile einfach zu beziehen sind.

Diese Aufgabe wird erfindungsgemäß dadurch gelöst, dass auf die Materialrückseite eine Textilie aufgeklebt oder aufgeschweißt ist, die in einer Richtung eine höhere Dehnbarkeit aufweist als quer dazu, und dass die Textilie derart auf der Materialrückseite aufliegt, dass die Textilie in Zugrichtung des flächigen Materials dehnbarer und nachgiebiger ist als quer dazu.

Hierdurch wird ein hochreißfestes Gewirk oder Gestrick als Backingmaterial verwendet, dass in sich extrem strapazierfähig und gleichzeitig dehnbar ist und diese Eigenschaften auch auf den Verbund und damit das Dekormaterial überträgt. Ein solches Kaschiermaterial verändert im Gesamtverbund die Gesamtdicke des Materials kaum, so dass auch insofern die Verarbeitung erleichtert ist.

Besonders sicher werden die Eigenschaften einer hohen Dehnbarkeit in nur einer Richtung erreicht, wenn die Textilie ein hochreißfestes Gewirke ist.

Ein Ausführungsbeispiel der Erfindung wird im Folgenden näher beschrieben.

Ein flächiges in Bahnen vorliegendes Material zum Beziehen von KFZ-Formteilen, wie ein den KFZ-Himmel bildendes Formteil oder ein KFZ-Lenkrad, besteht aus Leder, Kunstleder oder aus einem Leder imitieren Mikrofaserstoff (wie Alcantara oder Dinamica). Dieses Material wird rückseitig kaschiert, in dem auf die Rückseite eine Textilie aufgeklebt oder aufgeschweißt wird, die in einer Richtung (Zugrichtung) eine höhere Dehnbarkeit aufweist als in Querrichtung dazu. Hierfür eignet sich besonderen ein hochreißfestes Gewirke.

Beim Aufbringen eines solchen Materials auf ein Formteil wird das Material stets in einer Richtung wesentlich stärker gezogen und damit gespannt als in Querrichtung. Deshalb wird das Material so verwendet, dass es in Zugrichtung die höhere Dehnbarkeit aufweist und damit leicht um engere Rundungen gezogen und gespannt werden kann, ohne Falten zu werden und ohne zu reißen.

## Patentansprüche

1. Flächiges Material aus Leder oder einem Lederimitat zum Beziehen von Formbauteilen insbesondere für einen KFZ-Himmel oder von KFZ-Lenkrädern, wobei das Material beim Beziehen in einer Richtung (Zugrichtung) stärker gezogen wird als in der Querrichtung hierzu, **dadurch gekennzeichnet, dass** auf die Materialrückseite eine Textilie aufgeklebt oder aufgeschweißt ist, die in einer Richtung eine höhere Dehnbarkeit aufweist als quer dazu, und dass die Textilie derart auf der Materialrückseite aufliegt, dass die Textilie in Zugrichtung des flächigen Materials dehnbarer und nachgiebiger ist als quer dazu.

2. Material nach Anspruch 1, **dadurch gekennzeichnet, dass** die Textilie ein hochreißfestes Gewirke ist.
